# EUROPÄISCHE PATENTSCHRIFT

(11) **EP 1 190 907 B1**
(45) Veröffentlichungstag und Bekanntmachung des Hinweises auf die Patenterteilung: **06.10.2004**
(21) Anmeldenummer: 01116421.7
(22) Anmeldetag: 06.07.2001
(51) Int. Cl.: B60R 11/04

(54) **Anordnung mit einer Kamera, einer Aufbaustruktur und einer Halteeinrichtung eingebaut in ein Kraftfahrzeug**
Arrangement with a camera, a structure and a support mounted in a vehicle
Arragement avec une caméra, une structure et support montée dans un véhicule

(30) Priorität: 22.09.2000 DE 10047066
(43) Veröffentlichungstag der Anmeldung: 27.03.2002
(73) Patentinhaber: Dr.Ing. h.c.F. Porsche Aktiengesellschaft, 70435 Stuttgart (DE)
(72) Erfinder: Ellinger, Jürgen, 71672 Marbach (DE); Terry, Paul, San Juan Capistrano, CA 92675 (US); Farnham, Michael, Laguna Niguel, CA 92677 (US); Hill, Jason, Long Beach, CA 90803 (US); Meade, Martin, Costa Mesa, CA 92626 (US)

(56) Entgegenhaltungen:
- EP-A- 0 962 359
- GB-A- 2 238 993
- US-A- 5 833 101

## Beschreibung

Die Erfindung bezieht sich auf eine Anordnung mit einer Kamera, einer Autbaustruktur und einer Halteeinrichtung, eingebaut in ein Kraftfahrzeug, insbesondere einen Personenkraftwagen.

Es ist bekannt eine Anordnung mit einer Kamera, einer Autbaustruktur und einer Halteeinrichtung in ein Kraftfahrzeug bspw. einsitzigen Rennwagen zu installieren und mit ihr Aufnahmen über ein Renngeschehen mitzuschneiden und dann bspw. unter Vermittlung von Bildschirmen einem breiten Publikum zu überspielen.

Die DE 83 24 913 U1 befasst sich mit der Halterung von optischen Geräten u.a. Kameras in einem Kraftfahrzeug. Für die Halterung der jeweiligen Kamera ist eine feststehende Einrichtung im Fahrgastraum des Kraftfahrzeugs angeordnet.

Aus der IT- Firmenschrift Pininfarina über den Rossa, Juni 2000 geht ein Sportwagen hervor, der hinter Sitzen eines Fahrgastraums von einem Aufbau herausgeführte in Fahrzeugquerrichtung beabstandete Rollbügel aufweist, zwischen denen ein Flügel verläuft. In diesen Flügel ist eine Kamera integriert, mit der Verkehrsvorgänge hinter dem Sportwagen auf einen Bildschirm im Fahrgastraum übertragen werden; dadurch soll ein Rückblickspiegel entfallen.

Eine gattungsgemässe Anordnung mit einer Kamera, einer Autbaustruktur und einer Halteeinricchtung ist aus EP-A-0 962 359 bekannt.

Aufgabe der Erfindung ist es, eine Kamera in ein Kraftfahrzeug in der Weise einzubauen, dass sie zum einen für definierte Aufnahmen eine funktionsgerechte Lage einnimmt und zum anderen in eine Aufbaustruktur des Kraftfahrzeugs zweckdienlich integriert ist.

Diese Aufgabe wird nach der Erfindung durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteil sind darin zu sehen, dass die Kamera auf übersichtliche Art in den Aufbau integriert ist und nur bei tatsächlichem Bedarf aus der Ruhestellung in die Betriebsstellung zu verschwenken ist. Nach Gebrauch kann sie auf einfache Art wieder in die versenkte Ruhestellung bewegt werden, in der sie vor unbefugtem Zugriff gut gesichert ist. Die Halteeinrichtung lässt sich nicht nur problemlos in die Wand der Aufbaustruktur integrieren, sondern sie dient auch als Träger für die Kamera. Durch die Drehachse und Betätigungsvorrichtung ist eine einfache und zweckgerichtete Bewegung der Halteeinrichtung mit der Kamera gegeben. Schließlich kann das Kurbelgetriebe zwischen der Betätigungseinrichtung und der Drehachse der Halteeinrichtung mit vertretbarem Aufwand gut umgesetzt werden.

In der Zeichnung wird ein Ausführungsbeispiel gezeigt, das nachstehend näher beschrieben ist.

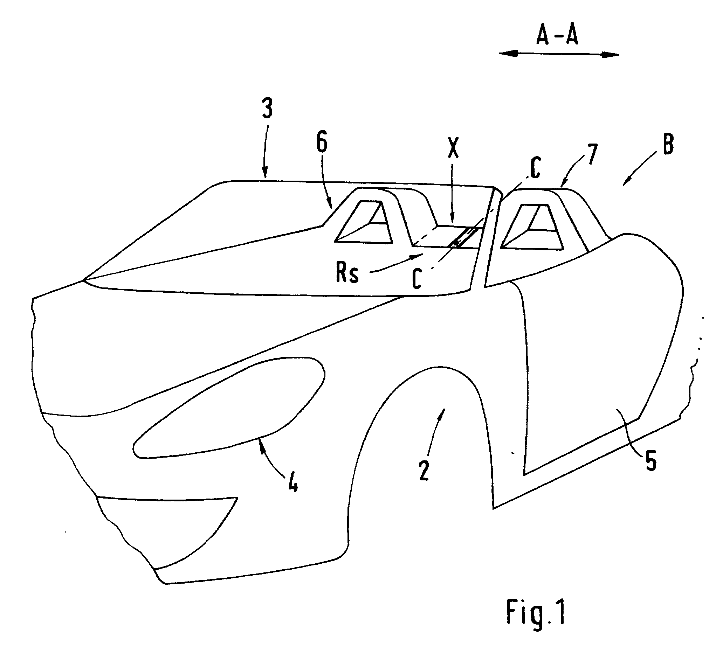

Es zeigen
- Fig.1: eine Schrägansicht von seitlich vorne auf ein Kraftfahrzeug mit der Anordnung nach der Erfindung,

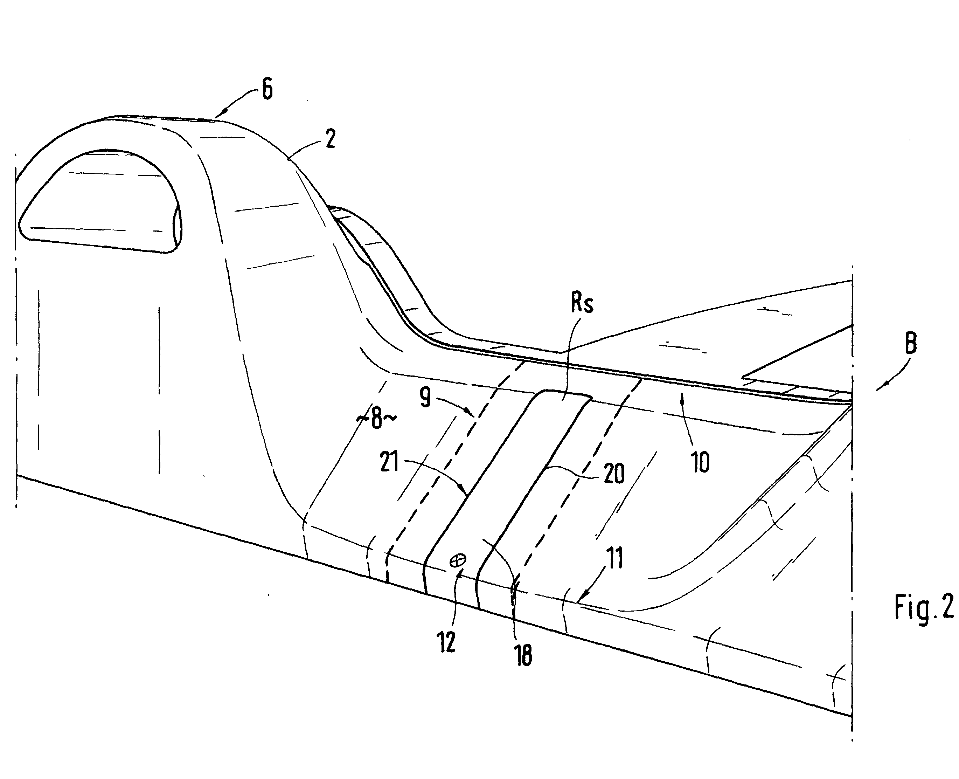

- Fig. 2: eine Einzelheit X der Fig.1 in größerem Maßstab,

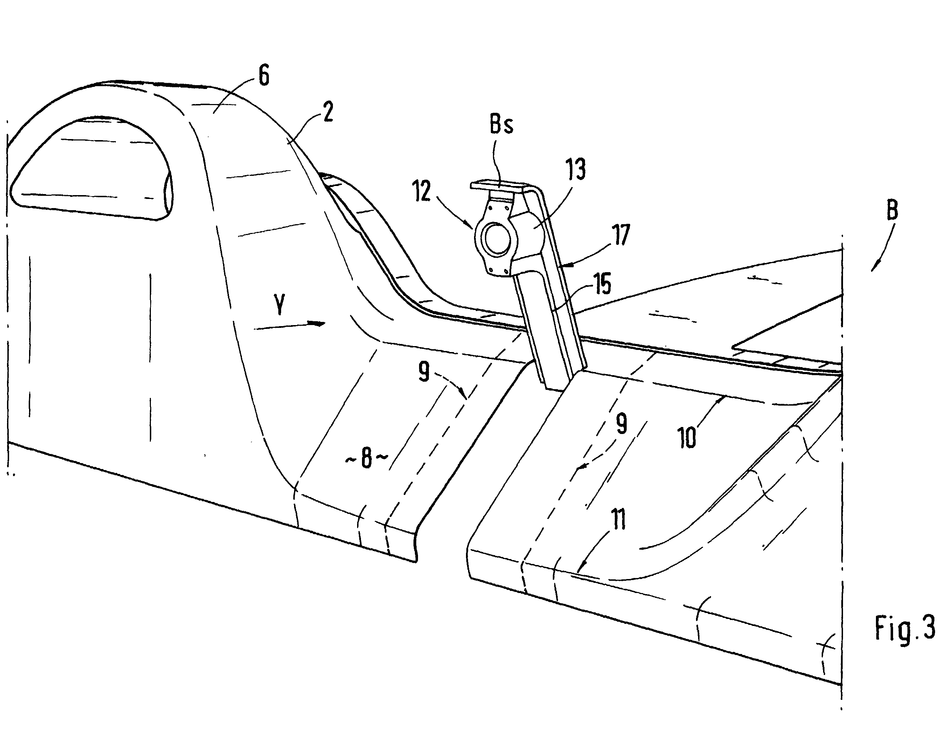

- Fig. 3: eine Ansicht entsprechend Fig. 2,

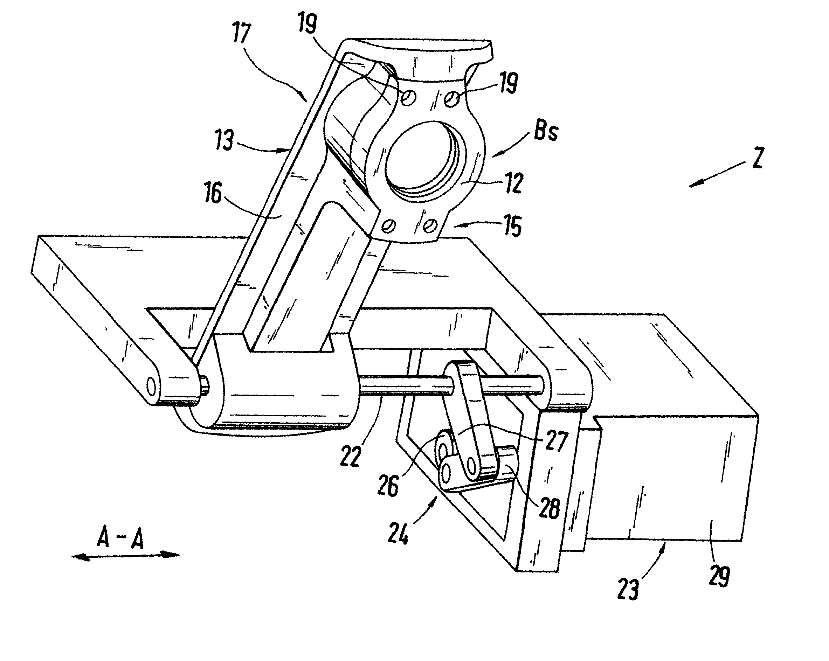

- Fig. 4: eine schematische Schrägansicht der Fig. 3 etwa in Pfeilrichtung Y,

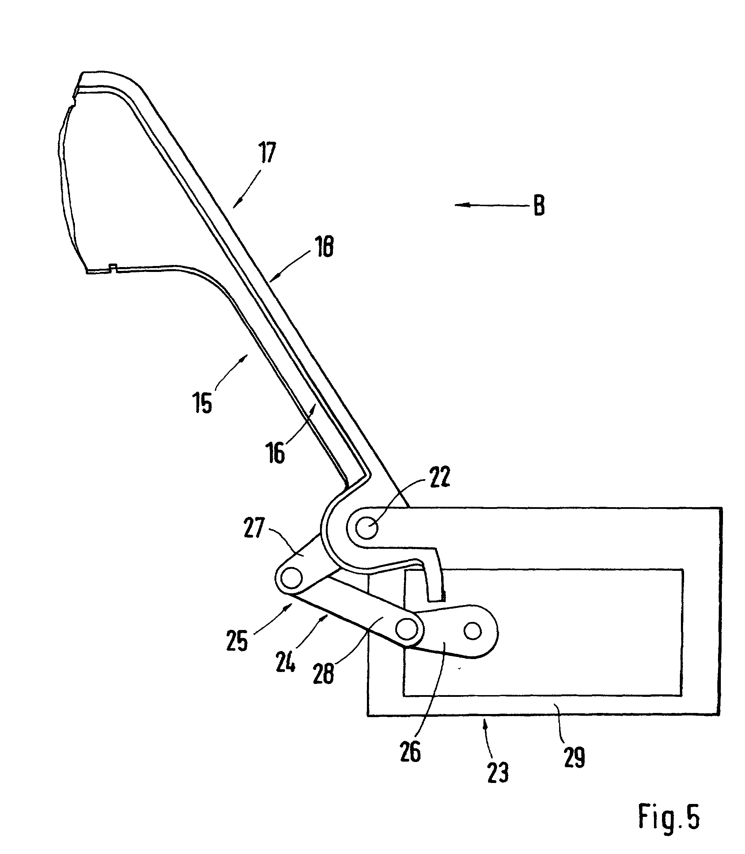

- Fig. 5: ein Ansicht etwa in Pfeilrichtung Z der Fig. 4.

Ein Kraftfahrzeug 1 wird durch einen Personenkraftwagen der Sportwagengattung verkörpert und umfasst eine Aufbaustruktur 2 mit einer Windschutzscheibe 3, einem Bugscheinwerfer 4, einer Tür 5 und hinter nicht gezeigten Sitzen sich abzeichnende Rollbügel 6 und 7. Zwischen den in Fahrzeugquerrichtung A-A mit Abstand zueinander angeordneten Rollbügeln 6 und 7 der Aufbaustruktur 2 erstreckt sich eine Wand 8; letztere wird von einer Schrägen 9 bestimmt, die in Fahrtrichtung B von einer Oberkante 10 zu einer Unterkante 11 verläuft.

Im Bereich dieser Wand 8, vorzugsweise in einer Fahrzeuglängsmittelebene C-C ist eine Kamera 12 angeordnet, und zwar unter Vermittlung einer Halteeinrichtung 13. Diese Kamera 12 ist mittels der Halteeinrichtung 13 aus einer in die Wand 8 versenkte Ruhestellung Rs in eine ausgefahrene Betriebsstellung Bs und vice versa verschwenkbar ausgeführt. Die Halteeinrichtung 13 ist auf einer ersten Seite 15 als Träger 16 für die Kamera 12 und auf einer zweiten Seite 17 als Wandabschnitt 18 der Wand 8 der Aufbaustruktur 2 ausgebildet. Die Kamera 12 ist mittels Schrauben 19 am Träger 16 gehalten, und der Wandabschnitt 18 und die Wand 8 verlaufen oberflächenbündig zueinander. Dabei besitzt der Wandabschnitt 18 parallele Begrenzungen 20 und 21, die sich in Fahrzeuglängsrichtung C-C erstrecken.

Zum Verschwenken der Halteeinrichtung 13 dient eine Drehachse 22, die in der Aufbaustruktur 2 gelagert ist und mit einer Betätigungseinrichtung 23 zusammenwirkt. Zwischen Drehachse 22 und Betätigungseinrichtung 23 ist ein Getriebe 24 vorgesehen, das ein Kurbelgetriebe 25 ist und einen ersten Kurbelhebel 26 an der Betätigungseinrichtung 23 und einen zweiten Kurbelhebel 27 an der Drehachse 22 aufweist. Darüber hinaus ist der erste Kurbelhebel 26 mit dem zweiten Kurbelhebel 27 über eine Schubstange 28 verbunden. Die Betätigungseinrichtung 23 ist wird im Ausführungsbeispiel durch einen Elektromotor 29. gebildet. Denkbar ist jedoch, anstelle des Elektromotors eine pneumatische oder hydraulische Betätigungseinrichtung vorzusehen.

## Patentansprüche

1. Anordnung mit einer Kamera (12), einer Autbaustruktur (2) und einer Halteeinrichtung (13) die in ein Kraftfahrzeug (1), insbesondere Personenkraftwagen eingebaut und an einer Aufbaustruktur (2) des Personenkraftwagens unter Vermittlung einer Halteeinrichtung (13) angeordnet ist, wobei die Kamera (12) mittels der Halteeinrichtung (13) aus einer versenkten Ruhestellung (Rs) in eine ausgefahrene Betriebsstellung (Bs) und vice versa verschwenkbar ist, **dadurch gekennzeichnet, dass** die Kamera (12) und 10 die Halteeinrichtung (13) in eine Wand (8) der Aufbaustruktur (2) integriert sind, welche Halteeinrichtung (13) auf einer ersten Seite (15) als Träger (16) für die Kamera (12) und auf einer zweiten Seite (17) als Wandabschnitt (18) der Wand (9) der Aufbaustruktur (2) ausgebildet ist und dass der Wandabschnitt (18) und die Wand der Aufbaustruktur (2) in der Ruhestellung (RS) der Kamera (12) oberflächenbündig zueinander verlaufen.

2. Anordnung nach Anspruch 1, **dadurch gekennzeichnet, dass** die Halteeinrichtung (13) auf einer ersten Seite (15) als Träger (16) für die Kamera (12) und auf einer zweiten Seite (16) als Wandabschnitt (17) der Wand (9) der Aufbaustruktur (2) ausgebildet ist.

3. Anordnung nach Anspruch 2, **dadurch gekennzeichnet, dass** der Wandabschnitt (17) und die Wand (8) der Aufbaustruktur (2) in der Ruhestellung (Rs) der Kamera (12) oberflächenbündig zueinander verlaufen.

4. Anordnung nach Anspruch 2, **dadurch gekennzeichnet, dass** der Wandabschnitt (17) parallele Begrenzungen (20 und 21) aufweist, die in Fahrzeuglängsrichtung (C-C) verlaufen.

5. Anordnung nach Anspruch 1, **dadurch gekennzeichnet, dass** die Halteeinrichtung (13) mittels einer Betätigungseinrichtung (23) verschwenkbar ist.

6. Anordnung nach den Ansprüchen 1 und 4, **dadurch gekennzeichnet, dass** die Halteeinrichtung (17) mittels einer an der Aufbaustruktur (2) gelagerten Drehachse (22) verschwenkbar ist, die mit der Betätigungseinrichtung (23) zusammenwirkt.

7. Anordnung nach Anspruch 6, **dadurch gekennzeichnet, dass** zwischen Betätigungseinrichtung (23) und Drehachse (22) ein Getriebe (24) vorgesehen ist.

8. Anordnung nach Anspruch 7, **dadurch gekennzeichnet, dass** das Getriebe (24) ein Kurbelgetriebe (25) ist und bspw. einen ersten Kurbelhebel (26) an der Betätigungseinrichtung (23) und einen zweiten Kurbelhebel (27) an der Drehachse (22) aufweist, wobei zwischen dem ersten Kurbelhebel (26) und dem zweiten Kurbelhebel (27) eine Schubstange (28) vorgesehen ist.

9. Anordnung nach einem oder mehreren der vorangehenden Ansprüche, **dadurch gekennzeichnet, dass** die Betätigungseinrichtung (23) ein Elektromotor (29) ist.

## Claims

1. An arrangement comprising a camera (12), a bodywork structure (2) and a mounting device (13), said arrangement being installed in a motor vehicle (1), in particular a passenger vehicle, and being arranged on a bodywork structure (2) of the passenger vehicle by means of a mounting device (13), wherein the camera (12) is pivotable by means of the mounting device (13) from a countersunk rest position (Rs) into an extended operating position (Bs) and vice versa, **characterised in that** the camera (12) and the mounting device (13) are integrated into a wall (8) of the bodywork structure (2), said mounting device (13) being formed on a first side (15) as a support (16) for the camera (12) and on a second side (17) as a wall portion (18) of the wall (9) of the bodywork structure (2), and **in that** the wall portion (18) and the wall of the bodywork structure (2) extend flush with one another on their outer surface in the rest position (Rs) of the camera (12).

2. An arrangement according to claim 1, **characterised in that** the mounting device (13) is formed on a first side (15) as a support (16) for the camera (12) and on a second side (16) as a wall portion (17) of the wall (9) of the bodywork structure (2).

3. An arrangement according to claim 2, **characterised in that** the wall portion (17) and the wall (8) of the bodywork structure (2) extend flush with one another on their outer surface in the rest position (Rs) of the camera (12).

4. An arrangement according to claim 2, **characterised in that** the wall portion (17) has parallel boundaries (20 and 21) extending in the longitudinal direction of the vehicle (C-C).

5. An arrangement according to claim 1, **characterised in that** the mounting device (13) is pivotable by means of an actuating device (23).

6. An arrangement according to claims 1 and 4, **characterised in that** the mounting device (17 [*sic ―* 13]) is pivotable by means of a rotary spindle (22) mounted on the bodywork structure (2) and cooperating with the actuating device (23).

7. An arrangement according to claim 6, **characterised in that** a transmission (24) is provided between the actuating device (23) and the rotary spindle (22).

8. An arrangement according to claim 7, **characterised in that** the transmission (24) is a crank mechanism (25) and e.g. comprises a first crank lever (26) on the actuating device (23) and a second crank lever (27) on the pivot pin (22), wherein a connecting rod (28) is provided between the first crank lever (26) and the second crank lever (27).

9. An arrangement according to one or more of the preceding claims, **characterised in that** the actuating device (23) is an electric motor (29).

## Revendications

1. Dispositif comportant une caméra (12), une structure de carrosserie (2) et un dispositif de fixation, qui est intégré à un véhicule automobile (1), en particulier une voiture de tourisme et est disposé, par l'intermédiaire d'un dispositif de fixation (13), sur une structure de carrosserie (2) de la voiture de tourisme, la caméra (12) pouvant pivoter, au moyen du dispositif de fixation (13), d'une position de repos (Rs) encastrée à une position de fonctionnement (Bs) extraite et inversement, **caractérisé en ce que** la caméra (12) et le dispositif de fixation (13) sont intégrés dans une paroi (8) de la structure de carrosserie (2), le dispositif de fixation (13) étant conçu sur un premier côté (15) comme support (16) pour la caméra (12) et sur un deuxième côté (17) comme portion (18) de la paroi (9) de la structure de carrosserie (2), et **en ce que**, en position de repos (Rs) de la caméra, la portion de paroi (18) et la paroi de la structure de carrosserie (2) s'étendent avec leurs surfaces dans un même plan.

2. Dispositif selon la revendication 1, **caractérisé en ce que** le dispositif de fixation (13) est conçu sur un premier côté (15) comme support (16) pour la caméra (12) et sur un deuxième côté (16) comme portion (17) de la paroi (9) de la structure de carroserie (2).

3. Dispositif selon la revendication 2, **caractérisé en ce que**, en position de repos (Rs) de la caméra (12), la portion de paroi (17) et la paroi (8) de la structure de carrosserie (2) s'étendent avec leurs surfaces dans un même plan.

4. Dispositif selon la revendication 2, **caractérisé en ce que** la portion de paroi (17) présente des délimitations (20 et 21) qui s'étendent dans la direction longitudinale (C-C) du véhicule.

5. Dispositif selon la revendication 2, **caractérisé en ce que** le dispositif de fixation (13) peut pivoter au moyen d'un dispositif d'actionnement (23).

6. Dispositif selon les revendications 1 et 4, **caractérisé en ce que** le dispositif de fixation (13) peut pivoter au moyen d'un axe de rotation (22) monté sur la structure de carrosserie (2), qui coopère avec le dispositif d'actionnement (23).

7. Dispositif selon la revendication 6, **caractérisé en ce qu'**une transmission (24) est prévue entre le dispositif d'actionnement (23) et l'axe de rotation (22).

8. Dispositif selon la revendication 7, **caractérisé en ce que** la transmission (24) est un mécanisme à manivelle (25) et comporte, par exemple, un premier maneton de manivelle (26) sur le dispositif d'actionnement (23) et un deuxième maneton de manivelle (27) sur l'axe de rotation (22), une bielle (28) étant prévue entre le premier maneton de manivelle (26) et le deuxième maneton de manivelle (27).

9. Dispositif selon une ou plusieurs des revendications précédentes, **caractérisé en ce que** le dispositif d'actionnement (23) est un moteur électrique (29).
